# EUROPEAN PATENT SPECIFICATION

(11) **EP 2 729 226 B1**
(45) Date of publication and mention of the grant of the patent: **09.09.2015**
(21) Application number: 12745768.7
(22) Date of filing: 04.07.2012
(51) Int. Cl.: A63H 33/08

(54) **TOY BUILDING SET**
SPIELZEUGBAUKASTEN
JEU DE CONSTRUCTION

(30) Priority: 05.07.2011 DK 201170361
(43) Date of publication of application: 14.05.2014
(73) Proprietor: LEGO A/S, 7190 Billund (DK)
(72) Inventor: LAURSEN, Kenneth, Wested, 8700 Horsens (DK)
(74) Representative: Guardian IP Consulting I/S
(86) International application number: PCT/DK2012/050250
(87) International publication number: WO 2013/004245

(56) References cited:
- WO-A1-00/41792
- WO-A1-2006/132693
- WO-A2-2011/044903
- KR-A- 20110 069 424

## Description

### Field of the invention

The present invention relates to a toy building set comprising a number of moulded building elements, each of which is provided with a first set of mutually compatibly designed male and/or female coupling parts by which they can be mutually coupled to build a construction comprising two or more such building elements, and where the toy building set furthermore comprises at least one layered building element constructed by building layer on layer of plastic material, like in 3D-printing, and being provided with coupling parts by which the layered building element can be coupled together with the moulded building elements.

### STATE OF THE ART

A toy building set comprising building elements or building blocks is known in many different embodiments, and in some of these the individual building elements are provided with a number of male and/or female coupling parts, *e.g.* in the form of coupling knobs projecting from a surface of the building element in such manner that these coupling knobs may engage with complementarily shaped coupling means of a second building element, whereby the coupling knobs of one of the building elements are received wholly or partly in the complementary coupling means of the second building element.

Thus, as such toy building sets often consist of relatively hard and inflexible 3-dimensional blocks and elements having the same basic construction and form, these toy building sets are extremely suited for building relatively massive constructions which are intended to look like buildings, machines and other inorganic and immobile constructions, whereas it is difficult solely by using the building elements in the toy building set to construct a building or a construction having more organic shapes, such as bi-curvature surfaces etc.

WO 2006/132693 discloses a construction set based on a number of moulded rods and connectors. To be able to connect these already manufactures rods and connectors to other building block systems or brands of building blocks, an adaptor is provided.

WO 2011/044903 discloses individually tailored soft components constructed by building layer on layer of plastic material to form the component. The components are soft components tailored to fit into an ear canal of a human being (hearing aid or sound reduction). This reference does not relate to toy building blocks.

Today, toy building sets are known where the toy building set itself comprises specially designed elements that can be built together with other building elements of the toy building set. The specially designed building elements thus offer the possibility of building buildings and constructions which are more like the real life embodiments. In this way it allows the user a certain additional flexibility in the building of a construction as the design elements, although they are often made for a single purpose, can also with some imagination be used in other connections.

Moreover, in addition it is known to manufacture building elements resembling known building elements and which can be coupled together with these, which building elements are manufactured by sequential construction of the building element by laying layer on layer of plastic material on top of each other, simultaneously with the thickness and extent of the layers being controlled to the effect that there is built a layered building element. Such manufacturing methods are known by the collective name "rapid prototyping", and an example of such a process is 3D-printing where the individual layers are made by printing a thermoplastic plastic material in a number of layers.

As production machines for this 3D-printing process are getting quite cheap and thereby available even to private users, there is thereby the opportunity to make individual designs, and in such a process it is known to e.g make 3D-printed adapters that can work as intermediate for the coupling together of building elements from various toy set manufacturers.

However, in practice it has turned out that e.g. 3D-printed building elements are often difficult to use for establishing an acceptable coupling together of these building elements with existing moulded building elements. Mainly, this is due to the rapid prototyping process being difficult to control as regards production with very fine tolerances of in particular the measurements of the coupling parts, and this entails problems of the quality of the retention force between the building elements of a construction, as fine tolerance is required to obtain a retention force between the building blocks which is neither too high nor too low.

### THE OBJECT OF THE INVENTION

On this background it is the object of the present invention to provide a toy building set and a method of manufacturing such a toy building set whereby it is possible to a greater extent than hitherto to build individually designed constructions and buildings by using the toy building set.

This is achieved by providing a toy building set as mentioned in the preamble, which is special in that the coupling parts of the layered building element are designed incompatibly with the male and female coupling parts of the moulded building elements, and in that the toy building set furthermore comprises a number of moulded adapter elements having coupling parts that are compatibly designed in view of coupling together with the male and/or female coupling parts of the moulded building elements as well as coupling parts that are designed compatibly with the coupling parts of the layered building element.

As it is possible to thereby design the moulded adaptor elements with coupling parts taking into consideration that a 3D-printed building element cannot necessarily be manufactured cheaply and rapidly with the same fine tolerances which it is possible to achieve by moulding of building elements, it is possible to build constructions and buildings by using more individually designed layers, such as 3D-printed building elements, and at the same time achieving a very high quality of the retention power between the individual parts of the construction or building.

In this connection it is pointed out that by the words compatible and incompatible coupling parts in connection with this invention what is meant is coupling parts which it is possible or impossible, respectively, to couple together for mutual retention.

In this connection it is clearly an advantage if the layered building element does not have coupling parts allowing it to be coupled together with a moulded building element without the use of an adaptor element.

Especially, it is advantageous if the coupling parts of the layered building element are designed as a female coupling part, and if the, relatively to the female coupling part of the layered building element, compatibly designed coupling part of the adaptor element is a male coupling part.

The coupling parts of the layered building element and of the complementarily thereto designed coupling part of the adaptor element may advantageously be designed so that the adaptor element, after coupling together of an adaptor element and a layered building element, get stuck relatively to each other with no possibility of being mutually rotatable or being displaceable relatively to each other.

In this connection a preferred embodiment of the invention is designed so that the coupling parts of the layered building element are designed as a duct having an essentially square cross-section with four side surfaces, and so that the coupling parts of the adaptor element comprise two resilient taps that are designed so that at insertion into the duct they abut against two opposite side surfaces of the duct, and where the resilient taps are each provided with flanges projecting away from each other on each separate resilient tap and which enter into engagement with a correspondingly designed flange arranged at the duct so that the adaptor element cannot be inserted into or removed from the duct without pressing the two resilient taps against each other.

In a further preferred embodiment the resilient taps have a length corresponding to the length of the duct, and the taps have a proximal end at which they are secured to the remaining portion of the adaptor element, and an opposite distal end, and where the flanges of the resilient taps are placed at the distal end, and where correspondingly an outwardly projecting flange is arranged at the proximal end of the flange. Thereby the two elements are inter-locked after coupling together and can only be released by pressing the two resilient taps against each other.

In one embodiment the toy building set can be of the type where the individual moulded building elements are so designed that at coupling together they retain each other only by friction between surfaces of the male and female coupling parts abutting and pressing against each other.

In this connection toy building set can also comprise moulded building elements which in addition to the first set of mutually compatibly designed male and/or female coupling parts also have a second set of mutually compatible male and female coupling parts, and where the first and the second sets of mutually compatible male and female coupling parts are mutually incompatible.

Also, the toy building set may be designed so that the second set of mutually compatibly designed male and/or female coupling parts are so designed that it can be coupled together by a snap function.

In connection with a toy building set of the last-mentioned type it may in a preferred embodiment comprise a first group of adaptor elements having coupling parts that are compatible with the first set of mutually compatibly designed male and/or female coupling parts and a second group adapter elements having coupling parts that are compatible with the second set of mutually compatibly designed male and/or female coupling parts.

Furthermore, the invention relates to a method of manufacturing a toy building set according to one or more of the preceding claims, the method comprising the following process stages in arbitrary succession:
Moulding, such as spray moulding, of a first group of building elements designed with a first set of mutually compatibly designed male and/or female coupling parts.

Manufacturing of at least one layered building element built by sequentially putting layer on layer of plastic material on top of each other, like in 3D-printing, and where the second building element has coupling parts designed incompatibly with the first set of mutually compatibly designed male and/or female coupling parts.

Moulding, such as spray moulding, of one or more adaptor elements designed with coupling parts being compatible with the first set of mutually compatibly designed male and/or female coupling parts as well as coupling parts being compatible with the coupling parts of the layered building element.

### FIGURES

- Fig. 1:: Is a perspective view of a toy building set according to the invention, shown as a partly exploded view.
- Figs. 2, 3 and 4:: Are all of them perspective views of different embodiments of adaptor element according to the invention.

### EMBODIMENT OF THE INVENTION

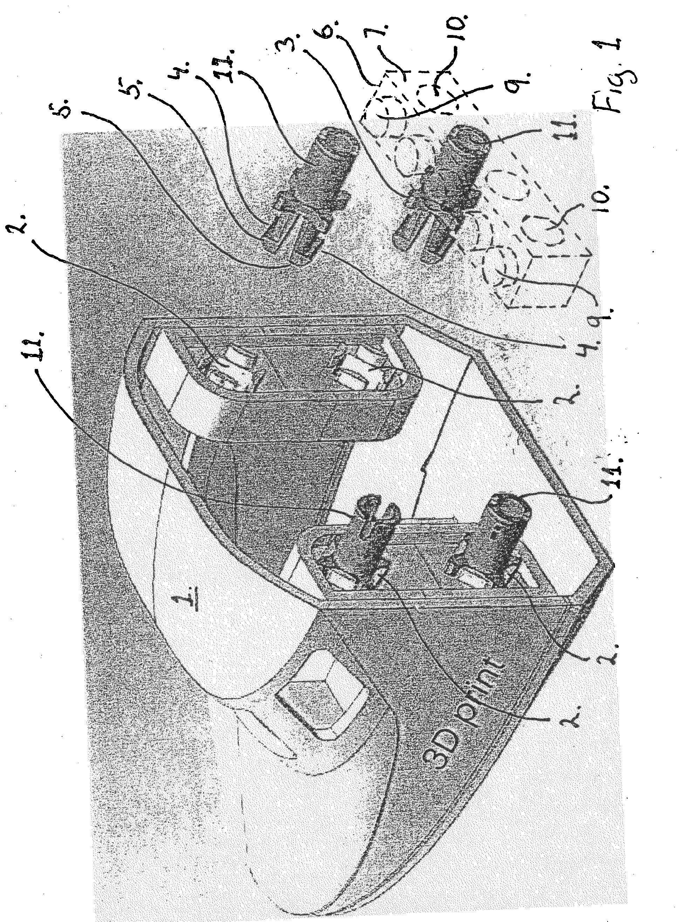

Thus, fig. 1 shows an example of a 3D-printed building element 1, the said building element being designed as the tip of an aircraft, but which can in principle easily be printed by using generally know and relatively cheap 3D-printers capable of printing such components in a given plastic material, such as thermoplastic.

The 3D-printed building element 1 is designed in the printing process so as to comprise a total of four essentially identical and square ducts 2, each of which is designed in view of receiving one of the four shown moulded adapter elements 3 which, for example, are manufactured by spray moulding of the adaptor element in a mould adapted for that purpose, which has one or more mould cavities corresponding to the shape of the adaptor element, but which according to the invention may have been manufactured by another process using a moulding tool with a similar mould cavity.

In view of comprehensibility, it is shown in the figure that two of the moulded adaptor elements 3 are mounted in each separate square duct, and the two other adaptor elements 3 are shown at a distance from the square ducts 2 into which they can be inserted and secured, in that the moulded adaptor element 3 are each provided at one of their ends with two resilient and elastic taps 4 that are so designed that at insertion into the duct they abut against two opposite side surfaces of the duct 2, and where the resilient taps 4 are each provided with flanges 5 projecting away from each other on each separate resilient tap 4, and which pass into engagement with a correspondingly designed flange arranged at the duct 2 so that the adaptor element 3 cannot be inserted into or removed from the duct 2 without the two resilient taps 4 being pressed in the direction towards each other.

Figure 1 also shows an additional building element in the form of a moulded building element 6 the contours of which are here shown by dotted lines; this building element could, in principle, be constituted by any known and moulded building element of a toy building set but is shown here in the form of a moulded building element having a box-shaped body part 7, which at its top side 8 is provided with a number of coupling parts in the form of coupling knobs 9 and at its bottom side (not shown) is provided with recesses forming coupling parts that are designed complementarily relatively to the coupling knobs 9 and in such manner that two or more moulded building elements 6 of this type can be coupled together by means of these coupling parts.

As shown, the moulded building element 6 also has a number of throughgoing annular coupling holes 10, and it is shown that in one of these coupling holes there is disposed one of the abovementioned moulded adapter elements 3, this adapter element 3, like the other adapter elements 3, being provided at its other end with a coupling part in the form of a slotted coupling pipe 11 designed complementarily with the annular coupling holes 10, so that the coupling pipe 11 can be inserted into and retained in the moulded building element 6.

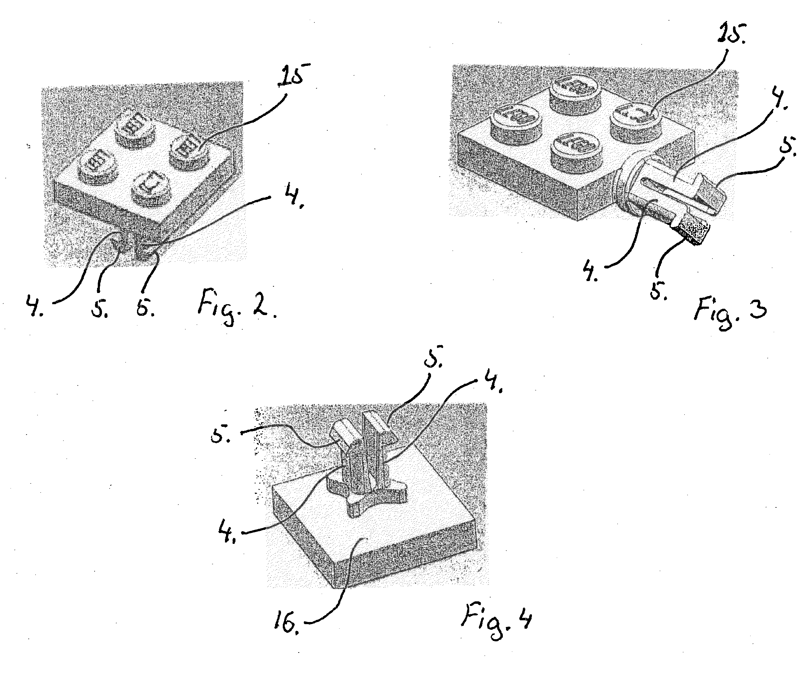

Figs. 2, 3 and 4 show other embodiments of the moulded adapter elements 12, 13 and 14, all of which are provided with two resilient and elastic taps 4, which in the same way as the moulded adapter elements 3 shown in fig. 1 are so designed that at insertion into a duct 2 of the 3D-printed building element 1 they abut against two opposite side surfaces of the duct 2 and in such manner that the adapter element 12, 13 or 14 cannot be inserted into or removed from the duct 2 without the two resilient taps 4 being pressed in the direction towards each other.

Alternatively to the coupling pipes 11, shown in Fig. 1, of the moulded adapter elements 3, the moulded adapter elements 12, 13 and 14 shown in figs. 2, 3 and 4 are designed with coupling knobs 15 or a coupling plate 16, respectively, by which they can be coupled together with other coupling parts than the annular coupling holes shown in the moulded building element 6 in Fig. 1.

The present invention is described in connection with a toy building set, but it can be used in connection with other types of products where the moulded toy building elements are replaced by a given product that can be coupled together with the layered building element by means of the moulded adapter element.

In addition, both the moulded building element 6 and the moulded adapter elements 3, 12, 13 and 14 may be designed differently, it being possible to e.g. design the coupling parts thereof in many other ways without thereby departing from the principle of the present invention.

## Claims

1. A toy building set comprising a number of moulded building elements, each of which is provided with a first set of mutually compatibly designed male and/or female coupling parts by which they can be mutually coupled together to build a construction comprising two or more such building elements, and where the toy building set furthermore comprises at least one layered building element constructed by building layer on layer of plastic material, like in 3D-printing, and being provided with coupling parts by which the layered building element can be coupled together with the moulded building elements, **characterized in that** the coupling parts (2) of the layered building element (1) are shaped incompatibly with the male (9) and female coupling parts of the moulded building elements (6) and **in that** the toy building set furthermore comprises a number of moulded adapter elements (3) having coupling parts that are designed compatibly in view of coupling together with the male (9) and/or female coupling parts of the moulded building elements (6) as well as coupling parts (4, 5) that are designed compatibly with the coupling parts (2) of the layered building element.

2. A toy building set according to claim 1, **characterized in that** the layered building element **(1)** does not have coupling parts allowing it to be coupled together with a moulded building element without the use of an adaptor element.

3. A toy building set according to claim 1 or 2, **characterized in that** the coupling parts (2) of the layered building element (1) are designed as a female coupling part and **in that** the, relatively to the female coupling part (2) of the layered building element (1), compatibly designed coupling part of the adaptor element (3) is a male coupling part.

4. A toy building set according to one or more of the preceding claims, **characterized in that** the coupling parts (2) of the layered building element (1) and of the complementarily thereto designed coupling part (4, 5) of the adaptor element (3) are so designed that the adaptor element (3), after coupling together of an adaptor element (3) and a layered building element (1), get stuck relatively to each other.

5. A toy building set according to claim 4, **characterized in that** the coupling parts (2) of the layered building element (1) are designed as a duct having an essentially square cross-section with four side surfaces and **in that** the coupling parts (4, 5) of the adaptor element (3) comprise two resilient taps (4) that are so designed that at insertion into the duct (2) they abut against two opposite side surfaces of the duct (2) and where the resilient taps (4) are each provided with flanges (5) projecting away from each other on each separate resilient tap (4) and which enter into engagement with a correspondingly designed flange arranged at the duct (2) so that the adaptor element (3) cannot be inserted into or removed from the duct (2) without pressing the two resilient taps (4) against each other.

6. A toy building set according to claim 5, **characterized in that** the resilient taps (4) have a length corresponding to the length of the duct (2) and **in that** the taps (4) have a proximal end at which they are secured to the remaining portion of the adaptor element (3) and an opposite distal end, and where the flanges (5) of the resilient taps (4) are placed at the distal end, and where correspondingly an outwardly projecting flange is arranged at the proximal end of the flange.

7. A toy building set according to one or more of the preceding claims, **characterized in that** the building elements retain each other only by friction between surfaces of the male and female coupling parts abutting and pressing against each other.

8. A toy building set according to claim 7, **characterized in that** the toy building set also comprises moulded building elements (6) which in addition to the first set of mutually compatibly designed male (9) and/or female coupling parts also have a second set of mutually compatible male and female coupling parts, and where the first and the second sets of mutually compatible male and female coupling parts are mutually incompatible.

9. A toy building set according to claim 8, **characterized in that** the second set of mutually compatible designed male and/or female coupling parts are so designed that it can be coupled together by a snap function.

10. A toy building set according to claim 8 or 9, **characterized in that** it comprises a first group of adaptor elements (3) having coupling parts that are compatible with the first set of mutually compatibly designed male and/or female coupling parts as well as a second group of adaptor elements (12, 13, 14) having coupling parts that are compatible with the second set of mutually compatibly designed male and/or female coupling parts.

11. A method of manufacturing a toy building set according to one or more of the preceding claims, the method comprising the following process steps in arbitrary succession:
. moulding, such as spray moulding, of a first group of building elements (6) designed with a first set of mutually compatibly designed male (9) and/or female coupling parts,
. preparation of at least one layered building element (1) built by sequentially putting layer on layer of plastic material on top of each other, like in 3D- printing, and where the second building element (1) has coupling parts designed incompatibly with the first set of mutually compatibly designed male (9) and/or female coupling parts,
. moulding, such as spray moulding, of one or more adaptor elements designed with coupling parts being compatible with the first set of mutually compatibly designed male (9) and/or female coupling parts as well as coupling parts that are compatible with the coupling parts of the layered building element (1).

## Patentansprüche

1. Ein Spielzeugbausatz umfassend eine Anzahl von geformten Bauelementen, von denen jedes mit einem ersten Satz von gegenseitig kompatibel ausgebildeten männlichen und/oder weiblichen Kopplungsteilen ausgestattet ist, mit denen sie gegenseitig zusammengekoppelt werden können, um ein Gebilde zu bauen, das ein oder mehrere solcher Bauelemente umfasst, und wobei der Spielzeugbausatz weiterhin zumindest ein geschichtetes Bauelement umfasst, hergestellt durch den Aufbau von Schicht auf Schicht von Kunststoffmaterial, wie beim 3D-Drucken, und ausgestattet mit Kopplungsteilen, mit denen das geschichtete Bauelement mit den geformten Bauelementen verbunden werden kann, **dadurch gekennzeichnet, dass** die Kopplungsteile (2) des geschichteten Bauelements (1) inkompatibel mit den männlichen (9) und weiblichen Kopplungsteilen der geformten Bauelemente (6) geformt sind, und **dass** der Spielzeugbausatz weiterhin eine Anzahl von geformten Adapterelementen (3) umfasst, die Kopplungsteile aufweisen, die kompatibel ausgebildet sind in Hinblick auf das Verbinden mit den männlichen (9) und/oder weiblichen Kopplungsteilen der geformten Bauelemente (6), ebenso wie Kopplungsteile (4, 5), die kompatibel mit den Kopplungsteilen (2) des geschichteten Bauelements ausgebildet sind.

2. Ein Spielzeugbausatz nach Anspruch 1, **dadurch gekennzeichnet, dass** das geschichtete Bauelement (1) keine Kopplungsteile aufweist, die ermöglichen, dieses ohne Verwendung eines Adapterelements mit einem geformten Bauelement zu verbinden.

3. Ein Spielzeugbausatz nach einem der Ansprüche 1 oder 2, **dadurch gekennzeichnet, dass** die Kopplungsteile (2) des geschichteten Bauelements (1) als weibliche Kopplungsteile ausgebildet sind und dadurch, dass das in Bezug auf das weibliche Kopplungsteil (2) des geschichteten Bauelements (1) kompatibel ausgebildete Kopplungsteil des Adapterelements (3) ein männliches Kopplungsteil ist.

4. Ein Spielzeugbausatz nach einem oder mehreren der vorangehenden Ansprüche, **dadurch gekennzeichnet, dass** die Kopplungsteile (2) des geschichteten Bauelements (1) und des dazu komplementär ausgebildeten Kopplungsteils (4, 5) des Adapterelements (3) so ausgebildet sind, dass das Adapterelement (3) und das geschichtete Bauelement (1) nach dem Verbinden eines Adapterelements (3) ineinander stecken bleiben.

5. Ein Spielzeugbausatz nach Anspruch 4, **dadurch gekennzeichnet, dass** die Kopplungsteile (2) des geschichteten Bauelements (1) als eine Röhre ausgebildet sind, die einen im Wesentlichen quadratischen Querschnitt mit vier Seitenflächen hat und dass, die Kopplungsteile (4, 5) des Adapterelements (3) zwei elastische Abgriffe (4) aufweisen, die so ausgebildet sind, dass sie bei dem Einsetzen in die Röhre (2) an zwei gegenüberliegende Seitenflächen der Röhre (2) anstoßen und wobei jeder der elastischen Abgriffe (4) mit Flanschen (5) versehen ist, die an jedem einzelnen Abgriff (4) so Herausragen, dass sie voneinander weg zeigen und die eine Verbindung eingehen mit einem entsprechend ausgebildeten in der Röhre (2) angeordneten Flansch, sodass das Adapterelement (3) nicht in die Röhre (2) eingeführt oder von ihr entfernt werden kann, ohne die zwei elastischen Abgriffe (4) gegeneinander zu pressen.

6. Ein Spielzeugbausatz nach Anspruch 5, **dadurch gekennzeichnet, dass** die elastischen Abgriffe (4) eine Länge aufweisen, die der Länge der Röhre (2) entspricht und dadurch, dass die Abgriffe (4) ein proximales Ende, an dem sie an dem übrigen Abschnitt des Adapterelements (3) befestigt sind, und ein gegenüberliegendes distales Ende aufweisen, und wobei die Flansche (5) der elastischen Abgriffe (4) sich am distalen Ende befinden, und wobei entsprechend ein nach außen ragender Flansch an dem proximalen Ende des Flansches angeordnet ist.

7. Ein Spielzeugbausatz nach einem oder mehreren der vorangehenden Ansprüche, **dadurch gekennzeichnet, dass** sich die Bauelemente nur durch Reibung der Flächen der männlichen und weiblichen Kopplungsteile, die aneinander angrenzen und gegeneinanderdrücken, gegenseitig halten.

8. Ein Spielzeugbausatz nach Anspruch 7, **dadurch gekennzeichnet, dass** der Spielzeugbausatz weiterhin geformte Bauelemente (6) umfasst, die zusätzlich zu dem ersten Satz von gegenseitig kompatibel ausgebildeten männlichen (9) und/oder weiblichen Kopplungsteilen noch einen zweiten Satz von gegenseitig kompatibel ausgebildeten männlichen und weiblichen Kopplungsteilen aufweisen, wobei der erste und der zweite Satz von gegenseitig kompatibel ausgebildeten männlichen und weiblichen Kopplungsteilen gegenseitig inkompatibel sind.

9. Ein Spielzeugbausatz nach Anspruch 8, **dadurch gekennzeichnet, dass** der zweite Satz von gegenseitig kompatibel ausgebildeten männlichen und weiblichen Kopplungsteilen so ausgebildet ist, dass dieser mit einer Schnappfunktion verbunden werden kann.

10. Ein Spielzeugbausatz nach einem der Ansprüche 8 oder 9, **dadurch gekennzeichnet, dass** dieser eine erste Gruppe von Adapterelementen (3), die Kopplungsteile haben, die mit dem ersten Satz von gegenseitig kompatibel ausgebildeten männlichen und/oder weiblichen Kopplungsteilen kompatibel sind, wie auch eine zweite Gruppe von Adapterelementen (12, 13, 14), die Kopplungsteile haben, die mit dem zweiten Satz von gegenseitig kompatibel ausgebildeten männlichen und/oder weiblichen Kopplungsteilen kompatibel sind, aufweist.

11. Ein Verfahren zur Herstellung eines Spielzeugbausatzes nach einem oder mehreren der vorangehenden Ansprüche, das Verfahren umfassend die folgenden Verfahrensschritte in beliebiger Reihenfolge:
Formen, beispielsweise Spritzformen, einer ersten Gruppe von Bauelementen (6) ausgebildet mit einem ersten Satz von gegenseitig kompatibel ausgebildeten männlichen (9) und/oder weiblichen Kopplungsteilen,
Erstellen von zumindest einem geschichteten Bauelement (1) aufgebaut durch fortlaufendes Ablegen Schicht auf Schicht von Kunststoffmaterial, wie beim 3D-Drucken, wobei das zweite Bauelement (1) Kopplungsteile aufweist, die inkompatibel mit dem ersten Satz von gegenseitig kompatibel ausgebildeten männlichen (9) und/oder weiblichen Kopplungsteilen ausgebildet sind,
Formen, beispielsweise Spritzformen, von ein oder mehreren Adapterelementen ausgebildet mit Kopplungsteilen, die kompatibel sind mit dem ersten Satz von gegenseitig kompatibel ausgebildeten männlichen (9) und/oder weiblichen Kopplungsteilen, ebenso wie Kopplungsteilen, die kompatibel sind mit den Kopplungsteilen des geschichteten Bauelements (1).

## Revendications

1. Jeu de construction comprenant un certain nombre d'éléments de construction moulés, dont chacun est pourvu d'un premier jeu de parties de couplage mâles et/ou femelles conçues de manière mutuellement compatible, par lesquelles ils peuvent être mutuellement couplés l'un à l'autre pour élaborer une structure comprenant deux ou plus de ces éléments de construction, et dans lequel le jeu de construction comprend en outre au moins un élément de construction stratifié conçu en appliquant couche sur couche une matière plastique, comme en impression 3D, et qui est pourvu de parties de couplage par lesquelles l'élément de construction stratifié peut être couplé conjointement avec les éléments de construction moulés, **caractérisé en ce que** les parties de couplage (2) de l'élément de construction stratifié (1) sont moulées de manière incompatible avec les parties de couplage mâles (9) et femelles des éléments de construction moulés (6) et **en ce que** le jeu de construction comprend en outre un certain nombre d'éléments d'adaptation moulés (3) ayant des parties de couplage qui sont conçues de manière compatible en vue de se coupler conjointement aux parties de couplage mâles (9) et/ou femelles des éléments de construction moulés (6) ainsi que des parties de couplage (4, 5) qui sont conçues de manière compatible avec les parties de couplage (2) de l'élément de construction stratifié.

2. Jeu de construction selon la revendication 1, **caractérisé en ce que** l'élément de construction stratifié (1) n'a pas de parties de couplage qui lui permettent de se coupler conjointement avec un élément de construction moulé sans l'utilisation d'un élément adaptateur.

3. Jeu de construction selon la revendication 1 ou la revendication 2, **caractérisé en ce que** les parties de couplage (2) de l'élément de construction stratifié (1) sont conçues sous la forme d'une partie de couplage femelle et **en ce que**, par rapport à la partie de couplage femelle (2) de l'élément de construction stratifié (1), la partie de couplage de l'élément adaptateur conçue de manière compatible (3) est une partie de couplage mâle.

4. Jeu de construction selon l'une quelconque des revendications précédentes, **caractérisé en ce que** les parties de couplage (2) de l'élément de construction stratifié (1) et de la partie de couplage (4, 5) de l'élément adaptateur (3) conçue de manière complémentaire à celle-ci sont conçues de sorte que l'élément adaptateur (3), après couplage conjoint d'un élément adaptateur (3), et un élément de construction stratifié (1) soient en prise l'un par rapport à l'autre.

5. Jeu de construction selon la revendication 4, **caractérisé en ce que** les parties de couplage (2) de l'élément de construction stratifié (1) sont conçues sous la forme d'un conduit ayant une section transversale sensiblement carrée avec quatre surfaces latérales et **en ce que** les parties de couplage (4, 5) de l'élément adaptateur (3) comprennent deux tenons élastiques (4) qui sont conçus de sorte que, lors de l'insertion dans le conduit (2), ils s'appuient contre deux surfaces latérales opposées du conduit (2), et où les tenons élastiques (4) sont chacun pourvus de rebords (5) qui s'écartent l'un de l'autre sur chaque tenon élastique séparé (4) et entrent en prise avec un rebord conçu de manière correspondante aménagé sur le conduit (2) de sorte que l'élément adaptateur (3) ne puisse être inséré dans le conduit (2) ou retiré de celui-ci sans presser les deux tenons élastiques (4) l'un contre l'autre.

6. Jeu de construction selon la revendication 5, **caractérisé en ce que** les tenons élastiques (4) ont une longueur correspondant à la longueur du conduit (2) et **en ce que** les tenons (4) ont une extrémité proximale où ils sont fixés à la partie restante de l'élément adaptateur (3) et une extrémité distale opposée, où les rebords (5) des tenons élastiques (4) sont placés à l'extrémité distale et où, de manière correspondante, un rebord saillant vers l'extérieur est aménagé à l'extrémité proximale du rebord.

7. Jeu de construction selon l'une quelconque des revendications précédentes, **caractérisé en ce que** les éléments de construction se retiennent l'un sur l'autre uniquement par friction entre les surfaces des parties de couplage mâles et femelles qui s'appuient l'une sur l'autre et se pressent l'une contre l'autre.

8. Jeu de construction selon la revendication 7, **caractérisé en ce que** le jeu de construction comprend également des éléments de construction moulés (6) qui, en plus du premier jeu de parties de couplage mâles (9) et/ou femelles mutuellement conçues de manière compatible, ont également un second jeu de parties de couplage mâles et femelles mutuellement compatibles et dans lequel le premier et le second jeu de parties de couplage mâles et femelles mutuellement compatibles sont mutuellement incompatibles.

9. Jeu de construction selon la revendication 8, **caractérisé en ce que** le second jeu de parties de couplage mâles et/ou femelles mutuellement conçues de manière compatible sont conçues de sorte qu'on puisse les coupler l'un à l'autre par une fonction à déclic.

10. Jeu de construction selon la revendication 8 ou la revendication 9, **caractérisé en ce qu'**il comprend un premier groupe d'éléments adaptateurs (3) ayant des parties de couplage qui sont compatibles avec le premier jeu de parties de couplage mâles et/ou femelles mutuellement conçues de manière compatible ainsi qu'un second groupe d'éléments adaptateurs (12, 13, 14) ayant des parties de couplage qui sont compatibles avec le second jeu de parties de couplage mâles et/ou femelles mutuellement conçues de manière compatible.

11. Procédé de fabrication d'un jeu de construction selon une ou plusieurs des revendications précédentes, le procédé comprenant les étapes suivantes en succession arbitraire consistant à :
- mouler, notamment par moulage par pulvérisation, un premier groupe d'éléments de construction (6) conçus avec un premier jeu de parties de couplage mâles (9) et/ou femelles mutuellement conçues de manière compatible,
- préparer au moins un élément de construction stratifié (1) conçu en appliquant en séquence couche sur couche une de matière plastique l'une par-dessus l'autre, comme en impression 3D, et dans lequel le second élément de construction (1) présente des parties de couplage conçues de manière incompatible avec le premier jeu de parties de couplage mâles (9) et/ou femelles mutuellement conçues de manière compatible,
- mouler, notamment par moulage par pulvérisation, un ou plusieurs éléments adaptateurs conçus avec des parties de couplage qui sont compatibles avec le premier jeu de parties de couplage mâles (9) et/ou femelles mutuellement conçues de manière compatible ainsi que des parties de couplage qui sont compatibles avec les parties de couplage de l'élément de construction stratifié (1).
